# EUROPÄISCHE PATENTSCHRIFT

(11) **EP 3 450 270 B1**
(45) Veröffentlichungstag und Bekanntmachung des Hinweises auf die Patenterteilung: **24.03.2021**
(21) Anmeldenummer: 18174604.1
(22) Anmeldetag: 28.05.2018
(51) Int. Cl.: B60T 8/24, B60T 8/32, B60T 15/46

(54) **LANDWIRTSCHAFTLICHES KRAFTFAHRZEUG**
AGRICULTURAL VEHICLE
VÉHICULE AGRICOLE

(30) Priorität: 28.08.2017 DE 102017119637
(43) Veröffentlichungstag der Anmeldung: 06.03.2019
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Ehlert, Christian, 33719 Bielefeld (DE); Schütte, Robin, 33142 Weine (DE); Erger, Lars, 34331 Marsberg (DE); Roger, Fabien, 75019 Paris (FR); Becker, Thomas, 75015 Paris (FR); Guiard-Dreux, Celestin, 27550 Degré (FR)
(74) Vertreter: CLAAS Gruppe

(56) Entgegenhaltungen:
- EP-A1- 2 269 880
- EP-A1- 2 644 464
- EP-A1- 2 783 928
- EP-A1- 2 937 252
- EP-A1- 3 009 312
- EP-A2- 0 370 671
- EP-A2- 0 385 648
- EP-A2- 0 953 490
- WO-A1-2008/044980
- WO-A1-2008/114039
- DE-A1-102011 117 882
- DE-A1-102015 108 681
- GB-A- 2 425 760
- US-A- 4 804 237
- US-A1- 2005 049 773
- US-A1- 2010 156 667

## Beschreibung

Die Erfindung betrifft einen landwirtschaftlichen Zug nach dem Oberbegriff des Anspruchs 1.

Landwirtschaftliche Arbeitsmaschinen wie Traktoren werden neben der reinen Feldarbeit auch oft für Transportaufgaben eingesetzt, bei denen beispielsweise auf Anhänger verladenes Erntegut transportiert wird. Dabei werden üblicherweise ein oder mehrere Anhänger von einem Zugfahrzeug gezogen und bilden zusammen mit dem Zugfahrzeug einen sog. landwirtschaftlichen Zug. Mit der zunehmenden Größe und Leistungsfähigkeit der landwirtschaftlichen Arbeitsmaschinen steigt auch die Möglichkeit, größere und schwerer beladene Anhänger zu ziehen, wobei die zulässigen Höchstgeschwindigkeiten, die landwirtschaftliche Arbeitsmaschinen im öffentlichen Straßenverkehr fahren dürfen, ebenfalls ansteigen. Anhänger weisen oftmals eine sog. Auflaufbremse auf, welche mechanisch auf eine oder mehrere Achsen wirkt. Bei der Auflaufbremse wird bei einem Auflaufen des Anhängers auf das Zugfahrzeug, also bei einer Verzögerung des Zugfahrzeugs, automatisch die Bremsanlage des auflaufenden Anhängers betätigt, so dass dieser durch die anhängerseitigen Bremsen ebenfalls verzögert wird. Hierbei kann es bauartbedingt jedoch zu kurzen zeitlichen Verzögerungen bis zum Ansprechen der Auflaufbremse kommen, wodurch kritische Fahrsituationen entstehen können. So kann beispielsweise ein stark bremsendes Zugfahrzeug bis zum Ansprechen der Auflaufbremse des Anhängers durch diesen geschoben und bereits in einen instabilen Fahrzustand gebracht werden (z.B. Einknicken des Zuges, sog. "Jackknifing"). Das zuvor Gesagte gilt nicht nur für mit beispielsweise Erntegut beladbare Anhänger, sondern auch gezogene und somit zu bremsende landwirtschaftliche Arbeitsaggregate wie Ballenpressen, Ackerbearbeitungsaggregate o. dgl., die vorliegend ebenfalls Anhänger im vorschlagsgemäßen Sinne bilden.

Die Problematik des Jackknifing besteht auch bei Zügen mit pneumatischer oder hydraulischer Bremsanlage. Um hierbei kritische Fahrsituationen durch Aufschieben des Anhängers auf das Zugfahrzeug zu verhindern, können Bremsanlagen der Anhänger an die Bremsanlage des jeweiligen Zugfahrzeugs angepasst werden. Hierzu wird für die anhängerseitige Bremsanlage an einem Bremsventil, im Folgenden Anhängerbremsventil genannt, eine bleibende Regelabweichung (Offset) eingestellt, die bewirkt, dass bei einem Abbremsen des landwirtschaftlichen Zuges zunächst die Bremsanlage des Anhängers anspricht, bevor die Bremsanlage des Zugfahrzeugs anspricht. Regelabweichung bzw. Offset bedeutet in diesem Sinne, dass das Anhängerbremsventil eher als das oder die Bremsventile des Zugfahrzeugs anspricht, so dass die Anhängerbremsanlage früher als die Zugfahrzeugbremsanlage betätigt wird, und/oder, dass das Anhängerbremsventil schneller als das oder die Bremsventile des Zugfahrzeugs öffnet, so dass der Bremsdruck der Anhängerbremsanlage zunächst höher als der Bremsdruck der Zugfahrzeugbremsanlage ist.

Allerdings ist eine optimale Einstellung der Regelabweichung für jeden einzelnen Anhänger bzw. jede einzelne Kombination aus Zugfahrzeug und Anhänger für einen Fahrer des Zuges kaum möglich, da hier zu viele Parameter, beispielsweise der Verschleißzustand der Anhängerbremsen, das Anhängergewicht und/oder die Art der Bremsanlage, berücksichtigt werden müssen. Insbesondere sind hierzu auch eine Reihe von mechanischen Umbaumaßnahmen nötig, die nicht ohne entsprechendes Werkzeug durchgeführt werden können. Solche Anpassungen bzw. Umbaumaßnahmen werden daher oft nicht, zumindest nicht vollständig, durchgeführt, insbesondere bei häufigem Anhängerwechsel.

Aus dem Stand der Technik sind unterschiedliche Bremseinrichtungen für landwirtschaftliche Züge bekannt. Aus der DE 10 2014 220 686 A1 ist beispielsweise bekannt, bei einer Bremsbetätigung eine anhängerseitige Achse derart zu bremsen, dass ein Verzögerungs-Sollwert erreicht wird, der einem Verzögerungswert des Zugfahrzeugs ohne Anhänger bei einer entsprechenden Bremsbetätigung entspricht. Aus der WO 20157052293 A1 ist bekannt, eine Betätigung einer Anhängerbremse und/oder eine Regelung eines Antriebsstrangs in Abhängigkeit von bestimmten Vorbedingungen und tatsächlich herrschenden Bedingungen vorzunehmen. Für ein zuverlässiges Einrichten und Betreiben dieser Bremsanlage ist jedoch auch eine sorgfältige Einarbeitung des Bedieners in die jeweilige Dokumentation notwendig, da ansonsten eine sichere Funktion des Bremssystems nicht gewährleistet ist.

Aus der DE 10 2015 108 681 A1 ist ein Verfahren sowie eine Vorrichtung zur Stabilisierung einer Zugfahrzeug-Anhängerkombination während der Fahrt bekannt.

Der Erfindung liegt das Problem zugrunde, einen landwirtschaftlichen Zug mit einem Zugfahrzeug und mindestens einem Anhänger bereitzustellen, der auf einfache Weise eine sichere Funktion des Bremssystems gewährleistet.

Das obige Problem wird bei einem landwirtschaftlichen Zug gemäß dem Oberbegriff von Anspruch 1 durch die Merkmale des kennzeichnenden Teils von Anspruch 1 gelöst.

Ein landwirtschaftlicher Zug umfasst ein Zugfahrzeug, insbesondere einen Traktor, und mindestens einen damit koppelbaren oder gekoppelten Anhänger. Unter einem Anhänger wird jedwedes von einem Zufahrzeug gezogenes Fahrzeug ohne eigenen Antrieb und mit mindestens einer Achse verstanden, worunter neben Anhängern zum Transportieren einer Ladung auch landwirtschaftliche Arbeitsaggregate verstanden werden, die mindestens eine nicht angetriebene Achse aufweisen. Der jeweilige Anhänger verfügt über eine Anhängerbremsanlage zum Bremsen der jeweiligen Anhängerachse oder - achsen. Das Zugfahrzeug, welches im Unterschied zu dem Anhänger angetrieben ist, weist eine separate Zugfahrzeugbremsanlage auf. Die Bremsanlagen werden über eine Steuervorrichtung, die insbesondere Bestandteil des Zugfahrzeugs ist, aber auch Bestandteil des jeweiligen Anhängers sein kann, gesteuert und/oder geregelt.

Wesentlich bei dem vorschlagsgemäßen landwirtschaftlichen Zug ist nun, dass über die Steuervorrichtung eine Einstellung, insbesondere eine bleibende Einstellung, mindestens einer der Bremsanlagen unter Berücksichtigung von Betriebs- und/oder Zustandsparametern des landwirtschaftlichen Zugs ermöglicht wird. Die Betriebs- und/oder Zustandsparameter sind insbesondere solche, die den landwirtschaftlichen Zug und insbesondere die Kombination aus Zugfahrzeug und Anhänger bzw. Anhängern spezifizieren, wobei vorzugsweise auch Besonderheiten wie der Verschleißzustand der Anhängerbremsen, das Anhängergewicht, der Ansprechdruck und/oder die Ansprechzeit der Bremsen, die Art der Bremsanlage o. dgl. berücksichtigt werden. Auf Basis entsprechender Parameter, die im Weiteren noch näher erläutert werden, passt die Steuervorrichtung damit automatisch das Bremsverhalten von Zugfahrzeug und Anhänger bzw. Anhängern optimal an die aktuellen Gegebenheiten an, so dass ein Auflaufen des Anhängers bzw. der Anhänger auf das Zugfahrzeug zu Beginn eines Bremsvorgangs verhindert werden kann. Da die Steuervorrichtung die notwendigen Einstellungen automatisch vornimmt, sind bei einem Anhängerwechsel bzw. Ankoppeln eines oder mehrerer Anhänger an das Zugfahrzeug keine oder zumindest keine nennenswerten Anpassungen oder Umbaumaßnahmen durch eine Bedienperson erforderlich. Auch besteht nicht mehr die Notwendigkeit, dass eine Bedienperson sich sorgfältig in eine Dokumentation für entsprechende Anpassungen einarbeitet. Der vorschlagsgemäße landwirtschaftliche Zug ist somit nicht nur bedienerfreundlicher, sondern erhöht auch die Verkehrssicherheit, da das Risiko einer unzureichenden Anpassung der Bremsanlagen von Zugfahrzeug und Anhänger minimiert wird.

Bei der Ausgestaltung gemäß Anspruch 2 weist mindestens eine der Bremsanlagen ein, insbesondere elektronisch, ansteuerbares Anhängerbremsventil zur Betätigung mindestens einer Bremse des jeweiligen Anhängers auf. Das Anhängerbremsventil ist dabei insbesondere am Zugfahrzeug angeordnet. In diesem Fall umfasst die automatische Einstellung der mindestens einen Bremsanlage, insbesondere der Anhängerbremsanlage, durch die Steuervorrichtung die Einstellung einer Regelabweichung bzw. eines Offsets des Anhängerbremsventils. Einstellung einer Regelabweichung bzw. eines Offsets meint, dass das Anhängerbremsventil durch diese Einstellung insbesondere zeitlich anders als das oder die Bremsventile des Zugfahrzeugs reagiert, und zwar derart, dass zunächst die Bremsanlage des Anhängers anspricht bzw. diese zunächst stärker anspricht als die Bremsanlage des Zugfahrzeugs, wodurch letztlich ein Auflaufen des Anhängers auf das Zugfahrzeug und schlimmstenfalls das sog. Jackknifing verhindert wird. Die Einstellung der Regelabweichung bewirkt insbesondere einen höheren Bremsdruck in der Anhängerbremsanlage und/oder eine frühere Betätigung dieser Bremsanlage.

Das Bremsverhalten wird nach der erfindungsgemäßen Ausgestaltung so angepasst, dass die anhängerseitigen Bremsen eher und stärker als die zugfahrzeugseitigen Bremsen ansprechen, wodurch ein Auflaufen des Anhängers auf das Zugfahrzeug zu Beginn eines Bremsvorgangs verhindert werden kann. Bei einem Zug mit mehr als einem Anhänger, beispielsweise mit zwei Anhängern, wird das Bremsverhalten entsprechend so angepasst, dass die Bremsen aller Anhänger eher und stärker als die zugfahrzeugseitigen Bremsen ansprechen, wodurch zu Beginn eines Bremsvorgangs ein Auflaufen aller Anhänger auf das Zugfahrzeugverhindert werden kann. Zusätzlich kann dem Fahrer von der Steuervorrichtung ein Vorschlag für eine optimale Reihenfolge der Anhänger vorgeschlagen bzw. vorgegeben werden, derart, dass die Bremsen des jeweils hinteren von zwei Anhängern eher und/oder stärker als die Bremsen des jeweils vorderen der zwei Anhänger ansprechen. Insbesondere wird die Reihenfolge der Anhänger derart vorgeschlagen bzw. vorgegeben, dass der stärker und/oder früher bremsende Anhänger hinten bzw. am Zugende angeordnet ist.

Anspruch 3 definiert Möglichkeiten, die automatische Einstellung, insbesondere Kalibrierung, der jeweiligen Bremsanlage durch die Steuervorrichtung auszulösen bzw. zu starten. Beispielsweise kann die automatische Einstellung in einer bevorzugten Ausgestaltung erfolgen, nachdem der jeweilige Anhänger an das jeweilige Zugfahrzeug angekoppelt und von der Steuervorrichtung erkannt bzw. automatisch identifiziert worden ist, wobei die automatische Einstellung besonders bevorzugt vollautomatisch startet, d. h. ohne Eingriff durch die Bedienperson. Grundsätzlich ist es aber genauso denkbar, dass die Bedienperson mindestens eine Bedienereingabe macht, die den automatischen Einstellvorgang startet und/oder auf der die automatische Einstellung basiert, wobei die Bedienereingabe beispielsweise die Eingabe oder Auswahl des Anhängertyps umfasst.

Bei der Ausgestaltung gemäß Anspruch 4 werden die Betriebs- und/oder Zustandsparameter während des Betriebs des landwirtschaftlichen Zuges, insbesondere während des Fahrbetriebs, beispielsweise während einer Beschleunigung und/oder Verzögerung (Anspruch 6), ermittelt und an die Steuervorrichtung übertragen. Es ist aber auch denkbar, der Steuervorrichtung durch eine Bedienereingabe die Betriebs- und/oder Zustandsparameter vorzugeben. Ebenso ist es denkbar, dass die Steuervorrichtung die Betriebs- und/oder Zustandsparameter aus einer Datenbank abruft. Die Daten können in der Datenbank anhängerspezifisch, d. h. für bestimmte Anhänger, und/oder zugfahrzeugspezifisch, d. h. für bestimmte Zugfahrzeuge, hinterlegt sein (Anspruch 5).

Die Ansprüche 7 und 8 betreffen verschiedene bevorzugte Betriebsparameter. Bevorzugte Zustandsparameter sind in Anspruch 9 aufgezählt.

In Anspruch 10 ist die Möglichkeit definiert, dass die Steuervorrichtung ermittelte Betriebs- und/oder Zustandsparameter und/oder eine eingestellte oder einzustellende Regelabweichung des jeweiligen Anhängerbremsventils speichern kann und/oder entsprechend gespeicherte Daten abrufen und/oder aktualisieren kann. Die Daten können in der Datenbank bzw. im Speicher der Steuervorrichtung auch mit weiteren Daten verknüpft sein, die Anspruch 11 näher spezifiziert.

Die Ausgestaltungen der Ansprüche 12 bis 16 betreffen einen Einrichtungsassistenten des landwirtschaftlichen Zuges, der die Einstellung der jeweiligen Bremsanlage durchführt oder eine solche Einstellung der Bremsanlage zumindest unterstützt.

Aufgrund des vorzugsweise geschlossenen Bremskreislaufs, insbesondere des hydraulischen oder pneumatischen Bremskreislaufs, erlaubt die Steuervorrichtung schließlich auch eine Überwachung des Bremsdrucks der Anhängerbremsanlage(n) und/oder der Zugfahrzeugbremsanlage, wobei Abweichungen von einem vorgegebenen Sollwert oder Sollwertebereich angezeigt werden können (Anspruch 17).

Im Folgenden wird die Erfindung anhand einer lediglich ein Ausführungsbeispiel darstellenden Zeichnung näher erläutert. In der Zeichnung zeigt
- Fig. 1: eine schematische Ansicht eines vorschlagsgemäßen landwirtschaftlichen Zuges mit einem Zugfahrzeug und einem Anhänger,
- Fig. 2: ein Ablaufdiagramm zur schematischen Darstellung der Funktionsweise eines Einrichtungsassistenten des landwirtschaftlichen Zuges gemäß Fig. 1 und
- Fig. 3: ein alternatives Ablaufdiagramm zur schematischen Darstellung der Funktions-weise eines Einrichtungsassistenten des landwirtschaftlichen Zuges gemäß Fig. 1.

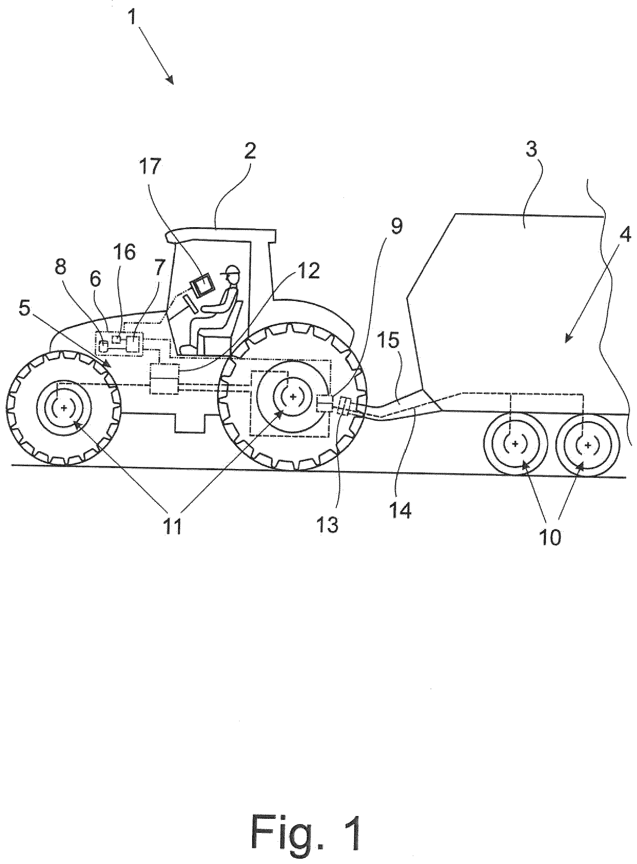

In Fig. 1 ist als Beispiel für einen landwirtschaftlichen Zug 1 ein Zugfahrzeug 2 in Form eines Traktors mit einem einzelnen daran angeordneten Anhänger 3 in Form einer Ballenpresse in einer schematischen Seitenansicht dargestellt. Grundsätzlich kann der vorschlagsgemäße Zug 1 aber auch mehr als einen Anhänger 3 aufweisen.

Ein Zugfahrzeug 2 im vorschlagsgemäßen Sinne kann jede landwirtschaftliche Arbeitsmaschine wie ein Feldhäcksler, ein Mähdrescher oder eben ein Traktor mit oder ohne angebautem Arbeitsaggregat sein. Dabei sind auch angehängte, insbesondere aufgesattelte, Anbaugeräte im vorschlagsgemäßen Sinne als Anhänger 3 zu verstehen.

Zugfahrzeug 2 und Anhänger 3 sind jeweils mit einer eigenen Bremsanlage 4, 5 ausgestattet, wobei die Bremsanlage 4 des Anhängers 3 als Anhängerbremsanlage und die Bremsanlage 5 des Zugfahrzeugs 2 als Zugfahrzeugbremsanlage definiert ist.

Ferner weist der landwirtschaftliche Zug 1 eine Steuervorrichtung 6 zur Steuerung und/oder Regelung zumindest einer der Bremsanlagen 4, 5 auf, die konfiguriert ist, die jeweilige Bremsanlage 4, 5 in Abhängigkeit mindestens eines Betriebsparameters und/oder mindestens eines Zustandsparameters des landwirtschaftlichen Zugs 1 automatisch einzustellen. Die Steuervorrichtung 6 weist hier und vorzugsweise einen Prozessor 7 und einen Speicher 8 mit einer Datenbank auf, in der insbesondere während des Betriebs des landwirtschaftlichen Zuges 1 ermittelte Betriebs- und/oder Zustandsparameter bzw. deren Werte und/oder Standardwerte für Betriebs- und/oder Zustandsparameter gespeichert sein können.

Indem die Steuervorrichtung 6 Betriebsparameter und/oder Zustandsparameter des landwirtschaftlichen Zuges 1 berücksichtigt, kann das Bremsverhalten des landwirtschaftlichen Zuges 1 optimal auf die vorhandene Kombination eines bestimmten Zugfahrzeugs 2 mit einem bestimmten Anhänger 3 angepasst werden, derart, dass, insbesondere zu Beginn eines Bremsvorgangs des landwirtschaftlichen Zuges 1, ein Auflaufen des Anhängers 3 auf das Zugfahrzeug 2 vermieden wird.

Hier und vorzugsweise weist zu diesem Zweck eine der Bremsanlagen 4, 5, hier die Anhängerbremsanlage 4 des Anhängers 3, ein elektronisch ansteuerbares Anhängerbremsventil 9 zur Betätigung mindestens einer Bremse 10 des Anhängers 3 auf. Die zuvor erwähnte automatische Einstellung der mindestens einen Bremsanlage 4, 5, hier und vorzugsweise beider Bremsanlagen 4, 5, umfasst insbesondere die Einstellung einer Regelabweichung des Anhängerbremsventils 9, das hier und vorzugsweise Bestandteil des Zugfahrzeugs 2 ist, derart, dass die Bremsen 10 des Anhängers 3 zu Beginn eines Bremsvorgangs früher und/oder stärker als die Bremsen 11 des Zugfahrzeugs 2 betätigt werden.

Die Einstellung der mindestens einen Bremsanlage 4, 5 wird von der Steuervorrichtung 6 hier und vorzugsweise automatisch dann durchgeführt, wenn der Anhänger 3 an das Zugfahrzeug 2 angekoppelt wird bzw. worden ist. Bei dem Ankoppelvorgang des Anhängers 3 an das Zugfahrzeug 2 wird der Anhänger 3 mit dem Zugfahrzeug 2 über ein Interface 13 verbunden, welches nicht nur die Anhängerbremsanlage 4 mit der Zugfahrzeugbremsanlage 5 zu einem gemeinsamen Bremskreislauf, hier symbolisch durch die Bremsleitungen 14 dargestellt, verbindet, sondern auch das Anhängerbremsventil 9 über eine Steuerleitung 15 mit der Steuervorrichtung 6. Die Verbindung über das Interface 13 aktiviert einen Signalgeber bzw. Sender, der hier und vorzugsweise am Anhänger 3 vorgesehen ist, nämlich einen sog. "Beacon", woraufhin ein den Anhänger 3 spezifizierender Bluetoothcode an einen zugeordneten Empfänger (nicht dargestellt) übertragen wird, wobei die Steuervorrichtung 6 basierend auf den empfangenen Daten entsprechend hinterlegte Einstellwerte aus einer Datenbank ausliest und darauf basierend die Anhängerbremsanlage 4 und/oder Zugfahrzeugbremsanlage 5 optimal an die konkrete Kombination aus Zugfahrzeug 2 und Anhänger 3 anpasst. Zusätzlich oder alternativ kann der Anhänger 3 auch mit einem Barcode und/oder RFID-Transponder ausgestattet sein, womit ebenfalls den Anhänger 3 spezifizierende Daten generiert und von der Steuervorrichtung 6 verarbeitet werden können. Auch ist eine optische Erkennung des Anhängers 3 und/oder Zugfahrzeugs 2 über eine Kameraanordnung denkbar, um den konkreten anzukoppelnden oder angekoppelten Anhänger 3 zu spezifizieren und entsprechende Daten an die Steuervorrichtung 6 zu übertragen.

Zusätzlich oder alternativ ist es vorschlagsgemäß auch denkbar, die automatische Einstellung der jeweiligen Bremsanlage 4, 5 basierend auf einer Bedienereingabe durchzuführen, vorzugsweise einer den Anhänger 3 und/oder die Regelabweichung des Anhängerbremsventils 9 spezifizierende Bedienereingabe. Eine Bedienereingabe kann beispielsweise über ein Endgerät 17, insbesondere fahrzeugseitiges Endgerät 17, oder ein Smart-Device (kabelloses, mobiles und vernetztes elektronisches Gerät wie z. B. Smartphone, Tablet o. dgl.) erfolgen. Auch Eingaben über andere Benutzerschnittstellen (UI), Multimedia Interfaces (MMI) sind denkbar, insbesondere unter Verwendung von Telematik zur Datenübertragung und -verarbeitung. Die Bedienperson kann hier auf spezielle Apps oder eine Farm Management Software zurückgreifen, um die Bedienereingabe vorzunehmen.

Die Betriebs- und/oder Zustandsparameter können während des Betriebs, insbesondere Fahrbetriebs, vorzugsweise während einer Beschleunigung und/oder Verzögerung, des landwirtschaftlichen Zuges 1 ermittelt und an die Steuervorrichtung 6 übertragen werden. Wie gesagt sind aber auch Bedienereingaben möglich. Zusätzlich oder alternativ kann aber auch vorgesehen sein, dass die Steuervorrichtung 6 entsprechende Daten aus einer Datenbank bzw. einem Speicher 8, der insbesondere Bestandteil der Steuervorrichtung 6 ist, abruft. Die Betriebs- und/oder Zustandsparameter können in der Datenbank anhängerspezifisch und/oder zugfahrzeugspezifisch hinterlegt sein.

Der mindestens eine Betriebsparameter kann gewählt sein aus der Gruppe umfassend ein Lastsignal (Luftmasse pro Hub) des Fahrzeugantriebs, einen hydraulischen Getriebedruck, einen pneumatischen oder hydraulischen Bremsdruck (Druck in der Bremsleitung), eine zwischen Zugfahrzeug 2 und Anhänger 3 wirkende Zugkraft und/oder Druckkraft, ein Zapfwellen- und/oder Motordrehmoment, eine Zapfwellen- und/oder Motordrehzahl, eine Beschleunigung des Anhängers 3 und/oder Zugfahrzeugs 2 und einen externen Druckbedarf, insbesondere hydraulischen oder pneumatischen Druckbedarf, beispielsweise einen Druckbedarf für den Betrieb eines Arbeitsaggregats wie beispielsweise einer Ballenpresse o. dgl.. Ein entsprechender Betriebsparameter wird hier und vorzugsweise ermittelt basierend auf Sensordaten mindestens eines Sensors, der gewählt ist aus der Gruppe umfassend einen Luftmassensensor, einen hydraulischen Drucksensor, einen pneumatischen Drucksensor, einen Zugkraftsensor, einen Druckkraftsensor, einen Drehmomentsensor, einen Drehzahlsensor und einen Beschleunigungssensor.

Der mindestens eine Zustandsparameter kann wiederum gewählt sein aus der Gruppe umfassend die Kupplungsart zwischen Zugfahrzeug 2 und Anhänger 3 und/oder zwischen zwei Anhängern 3 (Kugelkupplung, Hakenkupplung, Maulkupplung etc.), den Verschleißgrad mindestens einer der Bremsen 10, 11 oder aller Bremsen 10, 11 des Anhängers 3 und/oder des Zugfahrzeugs 2, die Art und/oder das Gewicht des Anhängers 3 und/oder des Zugfahrzeugs 2 im beladenen oder unbeladenen Zustand, die Art der Bremsanlage 4, 5 des Anhängers 3 und/oder des Zugfahrzeugs 2 (hydraulische Bremsanlage, pneumatische Bremsanlage, Anzahl der Bremsen, Bremsentyp wie Trommelbremse oder Scheibenbremse etc.), den minimalen Ansprechdruck der Bremsen 10 des jeweiligen Anhängers 3 und/oder Zugfahrzeugs 2, die Ansprechzeit der Bremsen 10 des jeweiligen Anhängers 3 und/oder Zugfahrzeugs 2, und die Bremsleistung des Anhängers 3 und/oder des Zugfahrzeugs 2.

Die Steuervorrichtung 6 weist hier und vorzugsweise wie beschrieben einen Speicher 8 auf, der es erlaubt, den mindestens einen ermittelten Betriebs- und/oder Zustandsparameter und/oder die eingestellte oder einzustellende Regelabweichung des Anhängerbremsventils 9 zu speichern. Es ist aber wie gesagt auch möglich, entsprechend gespeicherte Daten abzurufen und/oder zu aktualisieren. Eine Aktualisierung ist beispielsweise sinnvoll, um die Einstellung der jeweiligen Bremsanlage 4, 5 an neue Gegebenheiten anzupassen.

Im Falle einer Funktionsstörung und/oder unbekannter Betriebs- und/oder Umgebungsbedingungen kann die Steuervorrichtung 6 hier und vorzugsweise auch auf Standardwerte für die Betriebs- und/oder Zustandsparameter zurückgreifen bzw. diese aus der Datenbank abrufen. Insbesondere können die Standardwerte für die Betriebs- und/oder Zustandsparameter dann im weiteren Verlauf, vorzugsweise automatisch, von der Steuervorrichtung 6 aktualisiert werden.

In besagter Datenbank bzw. im Speicher 8 können die Betriebs- und/oder Zustandsparameter und/oder die Regelabweichungen des Anhängerbremsventils 9 auch mit weiteren Daten verknüpft sein. Lediglich beispielhaft und nicht abschließend seien hier die Verknüpfung mit einem in der Datenbank hinterlegten Anhänger, die Verknüpfung mit einem Sequenzmanagement, die Verknüpfung mit einer GPS-Position, die Verknüpfung mit einem landwirtschaftlichen Arbeitsauftrag, die Verknüpfung mit einem Bluetoothcode, die Verknüpfung mit einem Barcode, die Verknüpfung mit einem RFID-Code, die Verknüpfung mit einem Kamerabild des Anhängers, die Verknüpfung mit einem Smart Device, die Verknüpfung mit einem Endgerät 17 und/oder die Verknüpfung mit einem oder mehreren Sensorwerten genannt.

Vorschlagsgemäß kann der landwirtschaftliche Zug 1, beispielsweise als Bestandteil der Steuervorrichtung 6, außerdem einen Einrichtungsassistenten 16 aufweisen, der die automatische Einstellung der mindestens einen Bremsanlage 4, 5 durchführt oder unterstützt. Eine Unterstützung kann beispielsweise in einer Vorgabe bestimmter Einstellmöglichkeiten für die Bedienperson bestehen, aus der die Bedienperson eine Auswahl treffen kann und/oder die die Bedienperson bestätigen kann.

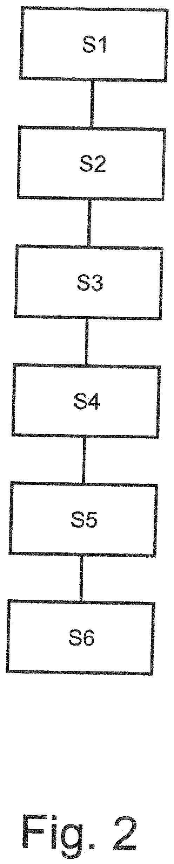

Zur automatischen Einstellung der mindestens einen Bremsanlage 4, 5 kann der Einrichtungsassistent 16 gemäß einem ersten Ausführungsbeispiel (Fig. 2) konfiguriert sein, in einem ersten Schritt S1 das Getriebeausgangsmoment zu speichern, das der landwirtschaftliche Zug 1 benötigt, während er ohne Betätigung einer Bremse 10, 11 bis zu einer vorgegebenen Fahrgeschwindigkeit beschleunigt, in einem zweiten Schritt S2 den landwirtschaftlichen Zug 1 nach dem Speichern des Getriebeausgangsmoments anzuhalten, anschließend in einem dritte Schritt S3 einen vorgegebenen Bremsdruck aufzubauen, dann in einem vierten Schritt S4 ein Getriebeausgangsmoment einzustellen, das dem Getriebeausgangsmoment während des Beschleunigens auf die vorbestimmte Geschwindigkeit entspricht, zzgl. einer vorgegebenen Regelabweichung für das Drehmoment am Getriebeausgang, wobei der Bremsdruck anschließend in einem fünften Schritt S5 wieder reduziert wird und wobei in einem sechsten Schritt S6, sobald sich der landwirtschaftliche Zug 1 wieder in Bewegung setzt, die Regelabweichung des Anhängerbremsventils 9 festgelegt wird, die für ein vorgegebenes bzw. gewünschtes Bremsverhalten einzustellen ist.

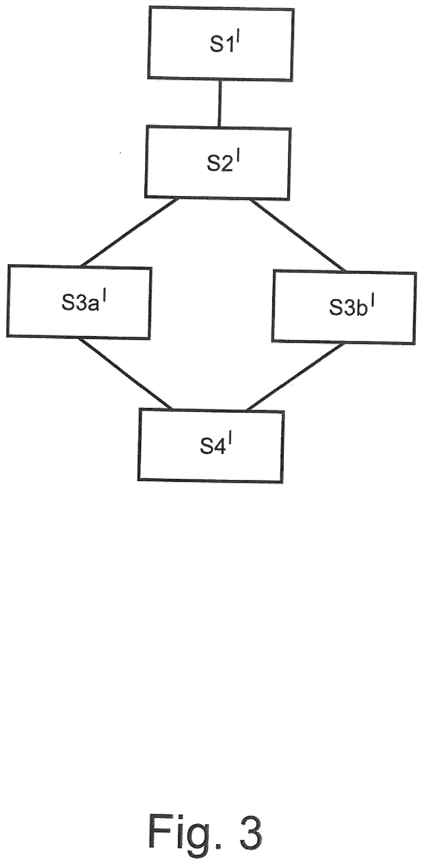

Gemäß einem weiteren Ausführungsbeispiel (Fig. 3) kann der Einrichtungsassistent 16 konfiguriert sein, zunächst in einem ersten Schritt S1' eine definierte Fahrgeschwindigkeit einzustellen, dann in einem zweiten Schritt S2' bei einer Betätigung, insbesondere einer definierten oder maximalen Betätigung, des Gaspedals, insbesondere durch den Fahrer, den Bremsdruck der Anhängerbremsanlage 4 solange zu erhöhen, bis der Beginn einer Bremsung des Anhängers 3 durch eine Bedienereingabe bestätigt (Schritt S3a') oder basierend auf den Sensordaten des mindestens einen Sensors erfasst wird (Schritt S3b'), wobei in Abhängigkeit von dem Bremsdruck zu dem Zeitpunkt, an dem der Beginn der Bremsung des Anhängers 3 bestätigt oder erfasst wurde, in einem vierten Schritt S4' die Regelabweichung des Anhängerbremsventils 9 eingestellt wird.

Gemäß noch einem weiteren Ausführungsbeispiel kann der Einrichtungsassistent 16 auch konfiguriert sein, bei einem landwirtschaftlichen Zug 1 mit mehr als einem Anhänger 3, beispielsweise mit zwei hintereinander angeordneten Anhängern 3, in Abhängigkeit eines oder mehrerer der beschriebenen Zustandsparameter eine Reihenfolge der Anhänger 3 innerhalb des landwirtschaftlichen Zugs 1 vorzugeben und/oder die Reihenfolge der Anhänger 3 innerhalb des landwirtschaftlichen Zugs 1 zu überprüfen. Insbesondere berücksichtigt der Einrichtungsassistent 16 die Kupplungsart, die Art und/oder das Gewicht der Anhänger 3 und/oder des Zugfahrzeugs 2 im beladenen oder unbeladenen Zustand und/oder Ansprechdruck und/oder Ansprechzeit der Bremsen 10 der Anhänger 3. Bei einer ungünstigen Reihenfolge kann der Einrichtungsassistent 16 auch eine Warnung anzeigen bzw. ausgeben.

Beispielsweise ist es denkbar, dass der Einrichtungsassistent 16 in dem Fall, dass das Zugfahrzeug 2 mit einem ersten Anhänger und einem zweiten Anhänger zu einem landwirtschaftlichen Zug 1 gekoppelt werden soll, vorschlägt, den ersten Anhänger als vorderen Anhänger 3 und den zweiten Anhänger als hinteren Anhänger vorzusehen, da beispielsweise der minimale Ansprechdruck der Bremsen 10 des ersten Anhängers größer als bei dem zweiten Anhänger ist und/oder die Ansprechzeit der Bremsen 10 des ersten Anhängers länger als bei dem zweiten Anhänger ist, mit anderen Worten zu Beginn eines Bremsvorgangs des landwirtschaftlichen Zuges 1 der zweite Anhänger eher und/oder stärker als der erste Anhänger verzögert.

Besonders bevorzugt erlaubt der Einrichtungsassistent 16 hier und vorzugsweise, die Regelabweichung des Anhängerbremsventils 9 ausgehend von einer Standard-Regelabweichung um einen vorgegebenen Betrag zu erhöhen, sobald während des Bremsens ein Schubbetrieb des Anhängers 3 erfasst wird, der einen vorgegebenen Sollwert oder Sollwertebereich überschreitet.

Bei dem hier beispielhaft erläuterten landwirtschaftlichen Zug 1 ist es schließlich aufgrund des geschlossenen Kreislaufs, den die Bremsleitungen 14 des Bremssystems bilden, möglich, den Bremsdruck der Anhängerbremsanlage 4 und/oder der Zugfahrzeugbremsanlage 5 zu überwachen und eine Abweichung von einem vorgegebenen Sollwert oder Sollwertebereich, der ebenfalls im Speicher 8 in der Datenbank abgelegt sein kann, anzuzeigen. Eine Anzeige kann beispielsweise optisch und/oder akustisch erfolgen.

### Bezugszeichenliste

- 1: Landwirtschaftlicher Zug
- 2: Zugfahrzeug
- 3: Anhänger
- 4: Anhängerbremsanlage
- 5: Zugfahrzeugbremsanlage
- 6: Steuervorrichtung
- 7: Prozessor
- 8: Speicher
- 9: Anhängerbremsventil
- 10: Anhängerbremse(n)
- 11: Zugfahrzeugbremse(n)
- 12: Zugfahrzeugbremsventil
- 13: Interface
- 14: Bremskreislauf bzw. -leitungen
- 15: Steuerleitung des Bremssystems
- 16: Einrichtungsassistent
- 17: Endgerät
- S1-S6: Schritte erstes Ablaufdiagramm
- S1'-S4': Schritte zweites Ablaufdiagramm

## Patentansprüche

1. Landwirtschaftlicher Zug mit einem Zugfahrzeug (2), insbesondere einem Traktor, und mindestens einem an das Zugfahrzeug (2) koppelbaren oder gekoppelten Anhänger (3), wobei der mindestens eine Anhänger (3) jeweils eine Anhängerbremsanlage (4) aufweist, wobei das Zugfahrzeug (2), welches einen Fahrantrieb aufweist, eine Zugfahrzeugbremsanlage (5) aufweist und wobei der landwirtschaftliche Zug (1) eine Steuervorrichtung (6) zur Steuerung und/oder Regelung mindestens einer der Bremsanlagen (4, 5) aufweist,
**dadurch gekennzeichnet,**
**dass** die Steuervorrichtung (6) konfiguriert ist, mindestens eine der Bremsanlagen (4, 5) des landwirtschaftlichen Zuges (1) in Abhängigkeit mindestens eines Zustandsparameters und/oder Betriebsparameters des landwirtschaftlichen Zuges (1) automatisch einzustellen, wobei die Steuervorrichtung (6) konfiguriert ist, das Bremsverhalten des landwirtschaftlichen Zuges (1) derart anzupassen, dass bei einem Zug (1) mit genau einem Anhänger (3) die anhängerseitigen Bremsen (10) eher und stärker als die zugfahrzeugseitigen Bremsen (11) ansprechen, und/oder bei einem Zug (1) mit mehr als einem Anhänger (3) die Bremsen (10) aller Anhänger (3) wiederum eher und stärker als die zugfahrzeugseitigen Bremsen (11) ansprechen.

2. Landwirtschaftlicher Zug nach Anspruch 1, **dadurch gekennzeichnet, dass** mindestens eine der Bremsanlagen (4, 5) ein ansteuerbares Anhängerbremsventil (9) zur Betätigung mindestens einer Bremse (10) des jeweiligen Anhängers (3) aufweist und die automatische Einstellung der mindestens einen Bremsanlage (4, 5) die Einstellung einer Regelabweichung des Anhängerbremsventils (9) umfasst.

3. Landwirtschaftlicher Zug nach einem der vorhergehenden Ansprüche, **dadurch gekennzeichnet, dass** die Einstellung der mindestens einen Bremsanlage (4, 5) automatisch erfolgt, nachdem der mindestens eine Anhänger (3) an das Zugfahrzeug (2) angekoppelt worden ist, und/oder, nachdem eine den mindestens einen Anhänger (3) und/oder die Regelabweichung des jeweiligen Anhängerbremsventils (9) spezifizierende Bedienereingabe erfolgt ist.

4. Landwirtschaftlicher Zug nach einem der vorhergehenden Ansprüche, **dadurch gekennzeichnet, dass** der mindestens eine Betriebsparameter und/oder Zustandsparameter während des Betriebs des landwirtschaftlichen Zuges (1) ermittelt und an die Steuervorrichtung (6) übertragen wird und/oder der Steuervorrichtung (6) durch eine Bedienereingabe vorgegeben wird und/oder von der Steuervorrichtung (6) aus einer Datenbank abgerufen wird.

5. Landwirtschaftlicher Zug nach Anspruch 4, **dadurch gekennzeichnet, dass** der mindestens eine Betriebsparameter und/oder Zustandsparameter in der Datenbank anhängerspezifisch und/oder zugfahrzeugspezifisch hinterlegt ist.

6. Landwirtschaftlicher Zug nach einem der vorhergehenden Ansprüche, **dadurch gekennzeichnet, dass** der mindestens eine Betriebsparameter und/oder Zustandsparamater während einer Beschleunigung und/oder Verzögerung des landwirtschaftlichen Zuges (1) ermittelt wird.

7. Landwirtschaftlicher Zug nach einem der vorhergehenden Ansprüche, **dadurch gekennzeichnet, dass** der mindesten eine Betriebsparameter ermittelt wird basierend auf Sensordaten mindestens eines Sensors, der gewählt ist aus der Gruppe umfassend einen Luftmassensensor, einen hydraulischen Drucksensor, einen pneumatischen Drucksensor, einen Zugkraftsensor, einen Druckkraftsensor, einen Drehmomentsensor, einen Drehzahlsensor und einen Beschleunigungssensor.

8. Landwirtschaftlicher Zug nach einem der vorhergehenden Ansprüche, **dadurch gekennzeichnet, dass** der mindestens eine Betriebsparameter gewählt ist aus der Gruppe umfassend ein Lastsignal, einen hydraulischen Getriebedruck, einen pneumatischen oder hydraulischen Bremsdruck, eine Zug- und/oder Druckkraft zwischen Anhänger (3) und Zugfahrzeug (2), eine Zug- und/oder Druckkraft zwischen zwei Anhängern (3), ein Zapfwellen- und/oder Motordrehmoment, eine Zapfwellen- und/oder Motordrehzahl, eine Beschleunigung des jeweiligen Anhängers (3) und/oder des Zugfahrzeugs (2) und einen externen Druckbedarf.

9. Landwirtschaftlicher Zug nach einem der vorhergehenden Ansprüche, **dadurch gekennzeichnet, dass** der mindestens eine Zustandsparameter gewählt ist aus der Gruppe umfassend die Kupplungsart zwischen Zugfahrzeug (2) und Anhänger (3) und/oder zwischen zwei Anhängern (3), den Verschleißgrad mindestens einer der Bremsen (10, 11) oder aller Bremsen (10, 11) des jeweiligen Anhängers (3) und/oder Zugfahrzeugs (2), die Art und/oder das Gewicht des jeweiligen Anhängers (3) und/oder Zugfahrzeugs (2), die Art der Bremsanlage (4, 5) des jeweiligen Anhängers (3) und/oder Zugfahrzeugs (2), den minimalen Ansprechdruck der Bremsen (10) des jeweiligen Anhängers (3) und/oder Zugfahrzeugs (2), die Ansprechzeit der Bremsen (10) des jeweiligen Anhängers (3) und/oder Zugfahrzeugs (2), und die Bremsleistung des jeweiligen Anhängers (3) und/oder Zugfahrzeugs (2).

10. Landwirtschaftlicher Zug nach einem der vorhergehenden Ansprüche, **dadurch gekennzeichnet, dass** die Steuervorrichtung (6) konfiguriert ist, den mindestens einen ermittelten Betriebsparameter und/oder Zustandsparameter und/oder die eingestellte oder einzustellende Regelabweichung zu speichern, und/oder, mindestens einen gespeicherten Betriebsparameter und/oder Zustandsparameter und/oder eine gespeicherte Regelabweichung abzurufen und/oder zu aktualisieren.

11. Landwirtschaftlicher Zug nach einem der vorhergehenden Ansprüche, **dadurch gekennzeichnet, dass** die Steuervorrichtung (6) konfiguriert ist, den mindesten einen Betriebsparameter und/oder Zustandsparameter und/oder die Regelabweichung beim Speichern jeweils zu verknüpfen mit
- einem in der Datenbank hinterlegten Anhänger (3),
- einem Sequenzmanagement,- einer GPS-Position,
- einem landwirtschaftlichen Arbeitsauftrag,
- einem Bluetoothcode,
- einem Barcode,
- einem RFID-Code,
- einem Kamerabild des jeweiligen Anhängers (3),
- einem Smart Device,
- einem Endgerät (17) und/oder
- einem oder mehreren Sensorwerten.

12. Landwirtschaftlicher Zug nach einem der vorhergehenden Ansprüche, **dadurch gekennzeichnet, dass** der landwirtschaftliche Zug (1) einen Einrichtungsassistenten (16) aufweist, der die automatische Einstellung der mindestens einen Bremsanlage (4, 5) durchführt oder unterstützt.

13. Landwirtschaftlicher Zug nach Anspruch 12, **dadurch gekennzeichnet, dass** der Einrichtungsassistent (16) konfiguriert ist,
- das Getriebeausgangsmoment zu speichern, das der landwirtschaftliche Zug (1) benötigt, während er ohne Betätigung einer Bremse (10, 11) bis zu einer vorgegebenen Fahrgeschwindigkeit beschleunigt,
- den landwirtschaftlichen Zug (1) nach dem Speichern des Getriebeausgangsmoments anzuhalten,
- anschließend einen vorgegebenen Bremsdruck aufzubauen,
- ein Getriebeausgangsmoment einzustellen, das dem Getriebeausgangsmoment während des Beschleunigens auf die vorbestimmte Geschwindigkeit entspricht, zzgl. einer vorgegebenen Regelabweichung für das Drehmoment am Getriebeausgang,
- wobei der Bremsdruck anschließend wieder reduziert wird und
- wobei, sobald sich der landwirtschaftliche Zug (1) wieder in Bewegung setzt, die Regelabweichung des jeweiligen Anhängerbremsventils (9) berechnet wird, die für ein vorgegebenes Bremsverhalten einzustellen ist.

14. Landwirtschaftlicher Zug nach Anspruch 12, **dadurch gekennzeichnet, dass** der Einrichtungsassistent (16) konfiguriert ist,
- eine definierte Fahrgeschwindigkeit einzustellen,
- anschließend bei einer Betätigung des Gaspedals den Bremsdruck der Anhängerbremsanlage(n) (4) solange zu erhöhen, bis der Beginn einer Bremsung des oder der Anhänger(s) (3) durch eine Bedienereingabe bestätigt oder basierend auf den Sensordaten des mindestens einen Sensors erfasst wird,
- wobei in Abhängigkeit von dem Bremsdruck zu dem Zeitpunkt, an dem der Beginn der Bremsung des oder der Anhänger(s) (3) bestätigt oder erfasst wurde, die Regelabweichung des jeweiligen Anhängerbremsventils (9) eingestellt wird.

15. Landwirtschaftlicher Zug nach einem der Ansprüche 12 bis 14, **dadurch gekennzeichnet, dass** der Einrichtungsassistent konfiguriert ist, bei einem landwirtschaftlichen Zug (1) mit mehr als einem Anhänger (3) in Abhängigkeit des mindestens einen Zustandsparameters eine Reihenfolge der Anhänger (3) innerhalb des landwirtschaftlichen Zugs (1) vorzugeben und/oder die Reihenfolge der Anhänger (3) innerhalb des landwirtschaftlichen Zugs (1) zu überprüfen.

16. Landwirtschaftlicher Zug nach einem der Ansprüche 12 bis 15, **dadurch gekennzeichnet, dass** der Einrichtungsassistent (16) konfiguriert ist, die Regelabweichung des jeweiligen Anhängerbremsventils (9) ausgehend von einer Standard-Regelabweichung um einen vorgegebenen Betrag zu erhöhen, sobald während des Bremsens ein Schubbetrieb des oder der Anhänger(s) (3) erfasst wird, der einen vorgegebenen Sollwert oder Sollwertebereich überschreitet.

17. Landwirtschaftlicher Zug nach einem der vorhergehenden Ansprüche, **dadurch gekennzeichnet, dass** die Steuervorrichtung (6) konfiguriert ist, den Bremsdruck der Anhängerbremsanlage(n) (4) und/oder der Zugfahrzeugbremsanlage (5) zu überwachen und eine Abweichung von einem Sollwert oder Sollwertebereich anzuzeigen.

## Claims

1. An agricultural vehicle combination having a traction vehicle (2), in particular a tractor, and at least one trailer (3) which can be coupled to or is coupled to the traction vehicle (2), wherein the at least one trailer (3) has a respective trailer braking system (4), wherein the traction vehicle (2), which has a propulsion unit, has a traction vehicle braking system (5) and wherein the agricultural vehicle combination (1) has a control device (6) for controlling and/or regulating at least one of the braking systems (4, 5),
**characterized in that**
the control device (6) is configured to automatically set at least one of the braking systems (4, 5) of the agricultural vehicle combination (1) as a function of at least one status parameter and/or operational parameter of the agricultural vehicle combination (1), wherein the control device (6) is configured to adjust the braking characteristics of the agricultural vehicle (1) in a manner such that with a vehicle combination (1) having exactly one trailer (3), the brakes (10) on the trailer side respond sooner and with more power than the brakes (11) on the traction vehicle side, and/or with a vehicle combination (1) having more than one trailer (3), the brakes (10) of all of the trailers (3) in turn respond sooner and with more power than the brakes (11) on the traction vehicle side.

2. The agricultural vehicle combination according to claim 1, **characterized in that** at least one of the braking systems (4, 5) has a controllable trailer brake valve (9) for actuating at least one brake (10) of the respective trailer (3) and the automatic setting of the at least one braking system (4, 5) comprises setting an offset for the trailer brake valve (9).

3. The agricultural vehicle combination according to one of the preceding claims, **characterized in that** the setting of the at least one braking system (4, 5) is carried out automatically after the at least one trailer (3) has been coupled to the traction vehicle (2), and/or after an operator input specifying the at least one trailer (3) and/or the offset for the respective trailer brake valve (9) has been made.

4. The agricultural vehicle combination according to one of the preceding claims, **characterized in that** the at least one operational parameter and/or status parameter is determined during the operation of the agricultural vehicle combination (1) and transmitted to the control device (6) and/or predetermined by means of an operator input to the control device (6) and/or is retrieved by the control device (6) from a database.

5. The agricultural vehicle combination according to claim 4, **characterized in that** the at least one operational parameter and/or status parameter is stored trailer-specific and/or traction vehicle-specific in the database.

6. The agricultural vehicle combination according to one of the preceding claims, **characterized in that** the at least one operational parameter and/or status parameter is determined during an acceleration and/or deceleration of the agricultural vehicle combination (1).

7. The agricultural vehicle combination according to one of the preceding claims, **characterized in that** the at least one operational parameter is determined on the basis of sensor data from at least one sensor which is selected from the group comprising an air mass sensor, a hydraulic pressure sensor, a pneumatic pressure sensor, a tractive force sensor, a compressive force sensor, a torque sensor, a speed sensor and an acceleration sensor.

8. The agricultural vehicle combination according to one of the preceding claims, **characterized in that** the at least one operational parameter is selected from the group comprising a load signal, a hydraulic drive pressure, a pneumatic or hydraulic brake pressure, a tractive force and/or compressive force between the trailer (3) and traction vehicle (2), a tractive force and/or compressive force between two trailers (3), a power take-off torque and/or engine torque, a power take-off speed and/or engine speed, an acceleration of the respective trailer (3) and/or of the traction vehicle (2) and an external pressure demand.

9. The agricultural vehicle combination according to one of the preceding claims, **characterized in that** the at least one status parameter is selected from the group comprising the type of coupling between the traction vehicle (2) and the trailer (3) and/or between two trailers (3), the degree of wear of at least one of the brakes (10, 11) or all of the brakes (10, 11) of the respective trailer (3) and/or traction vehicle (2), the type and/or weight of the respective trailer (3) and/or traction vehicle (2), the type of braking system (4, 5) of the respective trailer (3) and/or traction vehicle (2), the minimum response pressure of the brakes (10) of the respective trailer (3) and/or traction vehicle (2), the response time for the brakes (10) of the respective trailer (3) and/or traction vehicle (2), and the brake power of the respective trailer (3) and/or traction vehicle (2).

10. The agricultural vehicle combination according to one of the preceding claims, **characterized in that** the control device (6) is configured to store the at least one operational parameter and/or status parameter which is determined and/or the offset which is set or which is to be set, and/or to retrieve and/or update at least one stored operational parameter and/or status parameter and/or a stored offset.

11. The agricultural vehicle combination according to one of the preceding claims, **characterized in that** when storing, the control device (6) is configured to link the at least one operational parameter and/or status parameter and/or offset respectively with
- a trailer (3) stored in the database,
- a sequence management system,
- a GPS position,
- an agricultural operational assignment,
- a Bluetooth code,
- a barcode,
- a RFID code,
- a camera image from the respective trailer (3),
- a smart device,
- a terminal (17), and/or
- one or more sensor values.

12. The agricultural vehicle combination according to one of the preceding claims, **characterized in that** the agricultural vehicle combination (1) has a set-up assistant (16) which carries out or supports the automatic setting of the at least one braking system (4, 5).

13. The agricultural vehicle combination according to claim 12, **characterized in that** the set-up assistant (16) is configured
- to store the drive output torque which the agricultural vehicle combination (1) requires while it accelerates to a predetermined drive speed without actuation of a brake (10, 11),
- to stop the agricultural vehicle combination (1) after storing the drive output torque,
- then to build up a predetermined brake pressure,
- to apply a drive output torque which corresponds to the drive output torque during acceleration to the predetermined speed, plus a predetermined offset for the torque at the drive output,
- whereupon the brake pressure is then reduced again, and
- whereupon, as soon as the agricultural vehicle combination (1) is set in motion again, the offset of the respective trailer brake valve (9) which is to be set for predetermined brake characteristics is calculated.

14. The agricultural vehicle combination according to claim 12, **characterized in that** the set-up assistant (16) is configured
- to set a defined drive speed,
- then, upon actuation of an accelerator pedal, to increase the brake pressure of the trailer unit braking system(s) (4) until the start of braking of the trailer(s) (3) is confirmed by an operator input or is based on the sensor data from the at least one sensor,
- wherein the offset of the respective trailer brake valve (9) is set as a function of the brake pressure at the time at which the start of braking of the trailer(s) (3) is confirmed or detected.

15. The agricultural vehicle combination according to one of claims 12 to 14, **characterized in that**, in an agricultural vehicle combination (1) with more than one trailer (3), the set-up assistant is configured to predetermine a sequence for the trailers (3) within the agricultural vehicle combination (1) as a function of the at least one status parameter and/or to check the sequence of the trailers (3) within the agricultural vehicle combination (1).

16. The agricultural vehicle combination according to one of claims 12 to 15, **characterized in that** the set-up assistant (16) is configured to increase the offset of the respective trailer brake valve (9) by a predetermined amount starting from a standard offset as soon as coasting of the trailer or trailers (3) is detected during braking which exceeds a predetermined nominal value or range of nominal values.

17. The agricultural vehicle combination according to one of the preceding claims, **characterized in that** the control device is configured to monitor the brake pressure of the trailer braking system(s) (4) and/or the traction vehicle braking system (5) and to display any deviation from a nominal value or range of nominal values.

## Revendications

1. Attelage agricole comprenant un véhicule de traction (2), en particulier un tracteur et au moins une remorque (3) couplable ou couplée au véhicule de traction (2), la au moins une remorque (3) comportant respectivement une installation de freinage de remorque (4), le véhicule de traction (2), lequel comporte un groupe propulseur, comportant une installation de freinage de véhicule de traction (5), et l'attelage agricole (1) comportant un dispositif de commande (6) pour la commande et/ou la régulation au moins d'une des installations de freinage (4, 5), **caractérisé en ce que** le dispositif de commande (6) est configuré pour régler automatiquement au moins une des installations de freinage (4, 5) de l'attelage agricole (1) en fonction au moins d'un paramètre d'état et/ou d'un paramètre d'exploitation de l'attelage agricole (1), le dispositif de commande (6) étant configuré pour adapter le comportement de freinage de l'attelage agricole (1) de façon que, dans le cas d'un attelage (1) avec exactement une remorque (3), les freins côté remorque (10) réagissent plus tôt et plus fortement que les freins côté véhicule de traction (11) et/ou, dans le cas d'un attelage (1) avec plus d'une remorque (3), les freins (10) de toutes les remorques (3) réagissent là encore plus tôt et plus fortement que les freins côté véhicule de traction (11).

2. Attelage agricole selon la revendication 1, **caractérisé en ce qu'**au moins une des installations de freinage (4, 5) comporte une valve de freinage commandable (9) pour actionner au moins un frein (10) de la remorque respective (3), et le réglage automatique de la au moins une installation de freinage (4, 5) inclut le réglage d'un écart de régulation de la valve de freinage de remorque (9).

3. Attelage agricole selon une des revendications précédentes, **caractérisé en ce que** le réglage de la au moins une installation de freinage (4, 5) s'effectue automatiquement après que la au moins une remorque (3) a été couplée au véhicule de traction (2) et/ou après qu'une entrée utilisateur spécifiant la au moins une remorque (3) et/ou l'écart de régulation de la valve de freinage de remorque respective (9) a été effectuée.

4. Attelage agricole selon une des revendications précédentes, **caractérisé en ce que** le au moins un paramètre d'exploitation et/ou paramètre d'état est déterminé pendant le fonctionnement de l'attelage agricole (1) et est transmis au dispositif de commande (6) et/ou est prescrit au dispositif de commande (6) par l'intermédiaire d'une entrée utilisateur et/ou est consulté dans une banque de données par le dispositif de commande (6).

5. Attelage agricole selon la revendication 4, **caractérisé en ce que** le au moins un un paramètre d'exploitation et/ou paramètre d'état est enregistré dans la banque de données sous forme spécifique à la remorque et/ou sous forme spécifique au véhicule de traction.

6. Attelage agricole selon une des revendications précédentes, **caractérisé en ce que** le au moins un paramètre d'exploitation et/ou paramètre d'état est déterminé pendant une accélération et/ou un ralentissement de l'attelage agricole (1).

7. Attelage agricole selon une des revendications précédentes, **caractérisée en ce que** le au moins un paramètre d'exploitation est déterminé sur la base de données de capteur d'au moins un capteur, lequel est choisi parmi le groupe incluant un capteur de masse d'air, un capteur de pression hydraulique, un capteur de pression pneumatique, un capteur de force de traction, un capteur de force de pression, un capteur de moment de rotation, un capteur de vitesse de rotation et un capteur d'accélération.

8. Attelage agricole selon une des revendications précédentes, **caractérisé en ce que** le au moins un paramètre d'exploitation est choisi parmi le groupe incluant un signal de charge, une pression de transmission hydraulique , une pression de freinage pneumatique ou hydraulique, une force de traction et/ou de pression entre remorque (3) et véhicule de traction (2), une force de traction et/ou de pression entre deux remorques (3), un moment de rotation de prise de force et/ou de moteur, une vitesse de rotation de prise de force et/ou de moteur, une accélération de la remorque respective (3) et/ou du véhicule de traction (2) et un besoin de pression externe.

9. Attelage agricole selon une des revendications précédentes, **caractérisé en ce que** le au moins un paramètre d'état est choisi parmi le groupe incluant le type de couplage entre véhicule de traction (2) et la remorque (3) et/ou entre deux remorques (3), le degré d'usure au moins d'un des freins (10, 11) ou de tous les freins (10, 11) de la remorque respective (3) et/ou du véhicule de traction (2), le type et/ou le poids de la remorque respective (3) et/ou du véhicule de traction (2), le type d'installation de freinage (4, 5) de la remorque respective (3) et/ou du véhicule de traction (2), la pression minimale de réaction des freins (10) de la remorque respective (3) et/ou du véhicule de traction (2), le temps de réaction des freins (10) de la remorque respective (3) et/ou du véhicule de traction (2), et la puissance de freinage de la remorque respective (3) et/ou du véhicule de traction (2).

10. Attelage agricole selon une des revendications précédentes, **caractérisé en ce que** le dispositif de commande (6) est configuré pour mémoriser le au moins un paramètre d'exploitation et/ou paramètre d'état déterminé et/ou l'écart de régulation réglé ou à régler, et/ou pour consulter et/ou actualiser au moins un paramètre d'exploitation et/ou paramètre d'état mémorisé et/ou un écart de régulation mémorisé.

11. Attelage agricole selon une des revendications précédentes, **caractérisé en ce que** le dispositif de commande (6) est configuré pour associer le au moins un paramètre d'exploitation et/ou paramètre d'état et/ou l'écart de régulation lors de la mémorisation respectivement à
- une remorque (3) enregistrée dans la banque de données,
- une gestion séquentielle, - une position GPS,
- une tâche agricole,
- un code Bluetooth,
- un code-barres,
- un code RFID,
- une image caméra de la remorque respective (3),
- un dispositif intelligent,
- un poste terminal (17) et/ou
- une ou plusieurs valeurs de capteur.

12. Attelage agricole selon une des revendications précédentes, **caractérisé en ce que** l'attelage agricole (1) comporte un assistant de configuration (16) qui réalise ou facilite le réglage automatique de la au moins une installation de freinage (4, 5).

13. Attelage agricole selon la revendication 12, **caractérisé en ce que** l'assistant de configuration (16) est configuré pour
- mémoriser le couple de sortie de transmission dont l'attelage agricole (1) a besoin pendant qu'il accélère, sans actionnement d'un frein (10, 11), jusqu'à une vitesse de marche prédéfinie,
- arrêter l'attelage agricole (1) après la mémorisation du couple de sortie de transmission,
- établir ensuite une pression de freinage prédéfinie,
- instaurer un couple de sortie de transmission qui correspond au couple de sortie de transmission pendant l'accélération jusqu'à la vitesse prédéterminée, majoré d'un écart de régulation prédéfini pour le moment de rotation en sortie de transmission,
- la pression de freinage étant ensuite à nouveau réduite et
- dès que l'attelage agricole (1) s'est remis en mouvement, l'écart de régulation de la valve de freinage de remorque respective (9) étant calculé pour instaurer un comportement de freinage prédéfini.

14. Attelage agricole selon la revendication 12, **caractérisé en ce que** l'assistant de configuration (16) est configuré pour
- instaurer une vitesse de marche définie,
- en cas d'actionnement de la pédale d'accélérateur, augmenter ensuite la pression de freinage de la (des) installation(s) de freinage de remorque (4) jusqu'à ce que le début d'un freinage de la ou des remorques (3) soit confirmé par une entrée utilisateur ou détecté sur la base des données de capteur du au moins un capteur,
- en fonction de la pression de freinage au moment où le début du freinage de la ou des remorque(s) (3) a été confirmé ou détecté, l'écart de régulation de la valve de freinage de remorque respective (9) étant réglé.

15. Attelage agricole selon une des revendications 12 à 14, **caractérisé en ce que**, dans le cas d'un attelage agricole (1) avec plus d'une remorque (3), l'assistant de configuration est configuré pour prescrire un ordre des remorques (3) à l'intérieur de l'attelage agricole (1) en fonction du au moins un paramètre d'état et/ou pour contrôler l'ordre des remorques (3) à l'intérieur de l'attelage agricole (1).

16. Attelage agricole selon une des revendications 12 à 15, **caractérisé en ce que** l'assistant de configuration (16) est configuré pour augmenter l'écart de régulation de la valve de freinage de remorque respective (9) d'une valeur prescrite à partir d'un écart type de régulation dès que, pendant le freinage, est détecté un roulement en poussée de la ou des remorques (3) qui excède une valeur de consigne ou une plage de valeurs de consigne prescrite.

17. Attelage agricole selon une des revendications précédentes, **caractérisé en ce que** le dispositif de commande (6) est configuré pour contrôler la pression de freinage de la (des) remorque(s) (4) et/ou de l'installation de freinage de véhicule de traction (5) et pour afficher un écart par rapport à une valeur de consigne ou à une plage de valeurs de consigne.
